# EUROPÄISCHE PATENTSCHRIFT

(11) **EP 2 014 692 B1**
(45) Veröffentlichungstag und Bekanntmachung des Hinweises auf die Patenterteilung: **10.02.2016**
(21) Anmeldenummer: 08011828.4
(22) Anmeldetag: 01.07.2008
(51) Int. Cl.: C08G 18/28, C08G 18/78, C08G 71/04, C07F 7/18

(54) **Allophanat- und Silangruppen enthaltende Polyisocyanate**
Polyisocyanates containing allophanate and silane groups
Groupes d'allophanate et de silane contenant des polyisocyanates

(30) Priorität: 13.07.2007 DE 102007032666
(43) Veröffentlichungstag der Anmeldung: 14.01.2009
(73) Patentinhaber: Covestro Deutschland AG, 51373 Leverkusen (DE)
(72) Erfinder: Laas, Hans-Josef, Dr., 51519 Odenthal (DE); Halpaap, Reinhard, Dr., 51519 Odenthal (DE)
(74) Vertreter: Levpat

(56) Entgegenhaltungen:
- WO-A-98/18844
- WO-A1-2004/014991
- WO-A1-2005/066667
- WO-A1-2005/090500
- WO-A2-02/02244
- US-A- 4 468 492
- US-A- 5 587 502
- US-A1- 2004 077 778
- US-A1- 2006 173 140

## Beschreibung

Die Erfindung betrifft Allophanat- und Silangruppen enthaltende Polyisocyanate, ein Verfahren zur ihrer Herstellung und ihre Verwendung als Ausgangskomponente bei der Herstellung von Polyurethan-Kunststoffen, insbesondere als Vernetzerkomponente in Polyurethanlacken und -beschichtungen.

Alkoxysilangruppen enthaltende Polyisocyanatgemische sind seit längerer Zeit bekannt. Derartige Produkte, die neben der Isocyanatgruppe eine zweite reaktive, d. h. zur Vernetzung fähige Struktur enthalten, wurden in der Vergangenheit in unterschiedlichen Polyurethansystemen und -anwendungen zur Erzielung spezieller Eigenschaften, beispielsweise zur Verbesserung der Haftung, Chemikalien- oder Kratzbeständigkeit von Beschichtungen, eingesetzt.

Beispielsweise beschreibt die WO 03/054049 isocyanatfunktionelle Silane, hergestellt aus monomerenarmen aliphatischen oder cycloaliphatischen Polyisocyanaten und sekundären Aminopro-pyltrimethoxysilanen, als Haftvermittler für Polyurethan-Schmelzklebstoffe.

Auch nach der Lehre der JP-A 2005015644 läßt sich durch Einsatz von mit N-substituierten, d. h. sekundären Aminopropylalkoxysilanen modifizierten Polyisocyanaten oder Isocyanatprepolymeren die Haftung von Kleb- und Dichtstoffen verbessern.

Die EP-B 0 994 139 beansprucht Umsetzungsprodukte von aliphatischen bzw. cycloaliphatischen Polyisocyanaten mit unterschüssigen Mengen alkoxysilanfunktioneller Asparaginsäureester, wie sie in der EP 0 596 360 als Reaktionspartner für isocyanatfunktionelle Verbindungen beschrieben werden, und gegebenenfalls Polyethylenoxidpolyetheralkoholen als Bindemittel für einkomponentige feuchtigkeitsvernetzende Beschichtungen, Kleb- oder Dichtstoffe mit beschleunigter Aushärtung.

Umsetzungsprodukte aliphatischer bzw. cycloaliphatischer Polyisocyanate mit unterschüssigen Mengen alkoxysilanfunktioneller Asparaginsäureester oder sekundärer Aminoalkylsilane werden auch in der WO 02/058569 als Vernetzerkomponenten für Zweikomponenten-Polyurethan-Haftprimer beschrieben.

Die EP-B 0 872 499 beschreibt wässrige zweikomponentige Polyurethanlacke, die als Vernetzerkomponente Isocyanat- und Alkoxysilylgruppen aufweisende Verbindungen enthalten. Der Einsatz dieser speziellen Polyisocyanate führt zu Beschichtungen mit verbesserter Wasserfestigkeit bei gleichzeitig hohem Glanz.

Hydrophil modifizierte und daher leichter emulgierbare, Alkoxysilangruppen enthaltende Polyisocyanate wurden ebenfalls bereits als Vernetzerkomponenten für wässrige 2K-Lack- und Klebstoffdispersionen genannt (z. B. EP-A 0 949 284).

Zur Verbesserung der Kratzbeständigkeit von lösemittelhaltigen wärmehärtenden 2K-PUR-Automobil-Klar- bzw. Decklacken wurden in jüngster Zeit Umsetzungsprodukte von aliphatischen und/oder cycloaliphatischen Polyisocyanaten mit N,N-Bis-(trialkoxysilylpropyl)-aminen als Vernetzerkomponente vorgeschlagen (EP 1 273 640).

All diesen Silangruppen enthaltenden Polyisocyanatgemischen gemeinsam ist, dass sie durch anteilige Umsetzung von unmodifizierten Polyisocyanaten oder Polyisocyanatprepolymeren mit gegenüber Isocyanatgruppen reaktive Gruppen enthaltenden organofunktionellen Silanen, beispielsweise mercaptofunktionellen Silanen, primären Aminoalkylsilanen, sekundären N-alkylsubstituierten Aminoalkylsilanen oder alkoxysilanfunktionellen Asparaginsäureestem hergestellt werden.

Eine solche Modifizierung führt jedoch zwangsläufig zu einer Erniedrigung der mittleren Isocyanatfunktionalität bezogen auf die der eingesetzten Ausgangspolyisocyanate, was sich um so stärker auswirkt, je höher der angestrebte Silan-Gehalt im Reaktionsprodukt ist. In der Praxis sind in den obengenannten Anwendungen, wie z. B. Lacken oder Klebstoffen, zur Erzielung einer hohen Netzwerkdichte aber gerade Polyisocyanatvernetzer mit möglichst hoher Isocyanatfunktionalität erwünscht.

Darüber hinaus nimmt mit steigendem Modifizierungsgrad auch die Viskosität der Produkte aufgrund der ins Molekül eingebrachten Thiourethan- und insbesondere Harnstoffgruppen drastisch zu, weshalb sich die bisher bekannten Silangruppen enthaltenden Polyisocyanate in der Regel nur unter Verwendung erheblicher Mengen organischer Lösemittel in gelöster Form einsetzen lassen.

Ein weiterer Nachteil der bisher bekannten Herstellverfahren für derartige Produkte ist, dass die Umsetzung von Polyisocyanaten mit gegenüber Isocyanaten reaktiven organofunktionellen Silanen zu einer statistischen Verteilung der Silanfunktionen über das oligomere Polyisocyanatgemisch führt. Neben den gewünschten silanfunktionalisierten Polyisocyanaten liegen im Reaktionsgemisch immer auch unmodifiziertes Ausgangspolyisocyanat sowie - in zunehmendem Maße mit steigendem Modifizierungsgrad - völlig isocyanatfreie, ausschließlich Silangruppen als reaktive Gruppen tragende Moleküle vor. Dies führt bei Verwendung solcher Produkte als Vernetzer in Polyurethansystemen zu einer inhomogenen Verteilung der Silaneinheiten im Polymergerüst und somit nicht zum bestmöglichen Eigenschaftsniveau.

Aufgabe der vorliegenden Erfindung war es daher, neue, Silangruppen enthaltende Polyisocyanate zur Verfügung zu stellen, die nicht mit den Nachteilen des Standes der Technik behaftet sind. Diese neuen Polyisocyanate sollten in jedem Molekül beide Funktionalitäten, d. h. Isocyanat- und Silangruppen, tragen, gleichzeitig hohe mittlere Isocyanatfunktionalitäten und dennoch niedrige Viskositäten aufweisen.

Diese Aufgabe konnte mit der Bereitstellung der nachfolgend näher beschriebenen erfindungsgemäß modifizierten Polyisocyanate bzw. des Verfahrens zu ihrer Herstellung gelöst werden.

Die vorliegende Erfindung basiert auf der überraschenden Beobachtung, dass sich Silangruppen enthaltenden Hydroxyurethane bzw. Hydroxyamide, die durch Umsetzung von Aminoalkylsilanen mit cyclischen Carbonaten oder Lactonen unter Ringöffnung zugänglich sind, mit überschüssigen Mengen monomerer Diisocyanate leicht zu lagerstabilen, farbhellen Allophanatpolyisocyanaten umsetzen lassen, die sich selbst bei hohen Isocyanatfunktionalitäten und hohen Silangehalten durch niedrige Viskositäten auszeichnen.

Gegenstand der vorliegenden Erfindung ist ein Verfahren zur Herstellung Allophanatgruppen enthaltender Polyisocyanate durch Umsetzung
A) mindestens eines -aus der Reaktion von Aminosilanen mit cyclischen Carbonaten bzw. Lactonen erhältlichen- Silangruppen aufweisenden Hydroxyurethans und/oder Hydroxyamids
   mit einer bezogen auf die NCO-reaktiven Gruppen der Komponente A) molar überschüssigen Menge an
B) mindestens einem Diisocyanat mit aliphatisch, cycloaliphatisch, araliphatisch und/oder aromatisch gebundenen Isocyanatgruppen
   und gegebenenfalls nachfolgender Entfernung des nicht umgesetzten Diisocyanatüberschusses.

Gegenstand der Erfindung sind auch die nach diesem Verfahren erhältlichen Allophanat- und Silangruppen enthaltenden Polyisocyanate, sowie deren Verwendung als Ausgangskomponenten bei der Herstellung von Polyurethankunststoffen, insbesondere als Vernetzerkomponente in Polyurethanlacken und -beschichtungen.

Ausgangsverbindungen A) für das erfindungsgemäße Verfahren sind beliebige Reaktionsprodukte von Aminosilanen mit cyclischen Carbonaten oder Lactonen.

Geeignete Aminosilane zur Herstellung der Ausgangsverbindungen A) sind beispielsweise solche der allgemeinen Formel (I) 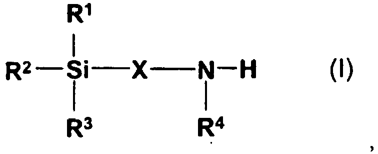 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht, der gegebenenfalls bis zu 2 Iminogruppen (-NH-) enthalten kann,
und
- R⁴: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 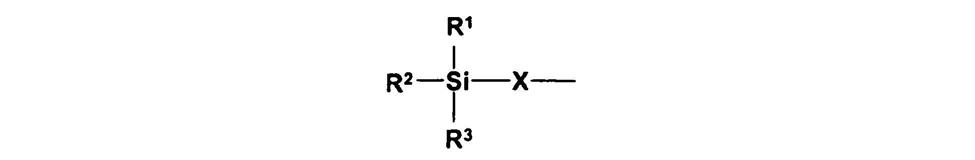 steht, in welchem R¹, R², R³ und X die vorstehend angegebene Bedeutung haben.

Geeignete Aminosilane sind beispielsweise 3-Aminopropyltrimethoxysilan, 3-Aminopropyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyl-tris(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethylbis(trimethylsiloxy)silan, 11-Aminoundecyltrimethoxysilan, N-Methyl-3-aminopropyltriethoxysilan, N-(n-Butyl)-3-aminopropyltrimethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimetoxysilan, 3-(3-Aminopropoxy)-3,3-dimethyl-1-propenyltrimethoxysilan, 3-Aminopropylmethylbis(trimethylsiloxy)-silan, 3-Aminopropyltris(trimethylsiloxy)-silan, 3-Aminopropylpentamethyldisiloxan oder beliebige Gemische solcher Aminosilane.

Bevorzugte Aminosilane zur Herstellung der Ausgangskomponente A) sind solche der allgemeinen Formel (I), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann,
- X: für einen linearen oder verzweigten Alkylenrest mit 2 bis 10 Kohlenstoffatomen steht, der gegebenenfalls bis zu 2 Iminogruppen (-NH-) enthalten kann,
und
- R⁴: für Wasserstoff, einen gesättigten, linearen oder verzweigten, aliphatischen oder cycloaliphatischen Rest mit bis zu 6 Kohlenstoffatomen oder einen Rest der Formel 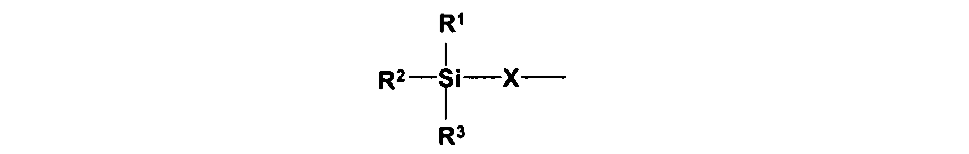 steht, in welchem R¹, R², R³ und X die vorstehend angegebene Bedeutung haben.

Bevorzugt stehen
- R¹, R² und R³: jeweils für Alkylreste mit bis zu 6 Kohlenstoffatomen und/oder Alkoxyreste, die bis zu 3 Sauerstoffatomen enthalten, mit der Maßgabe, dass mindestens einer der Reste R¹, R² und R³ für einen solchen Alkoxyrest steht,
- X: für einen linearen oder verzweigten Alkylenrest mit 3 oder 4 Kohlenstoffatomen, und
- R⁴: für Wasserstoff, einen Methylrest oder einen Rest der Formel 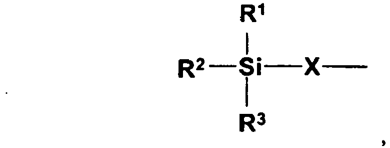 in welchem R¹, R², R³ und X die vorstehend angegebene Bedeutung haben.

Besonders bevorzugt stehen
- R¹, R² und R³: jeweils für Methyl, Methoxy und/oder Ethoxy, mit der Maßgabe, dass mindestens einer der Reste R¹, R² und R³ für einen Methoxy- oder Ethoxyrest steht,
- X: für einen Propylenrest (-CH₂-CH₂-CH₂-), und
- R⁴: für Wasserstoff, einen Methylrest oder einen Rest der Formel 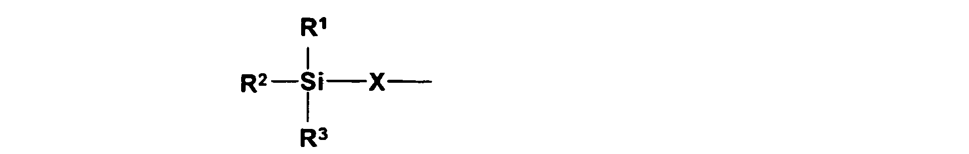 in welchem R¹, R², R³ und X die vorstehend angegebene Bedeutung haben.

Besonders bevorzugte Aminosilane sind 3-Aminopropyltrimethoxysilan, 3-Aminopropyltriethoxysilan, 3-Aminopropylmethyldimethoxysilan und/oder 3-Aminopropylmethyldiethoxysilan.

Bei der Herstellung der Ausgangsverbindungen A) für das erfindungsgemäße Verfahren werden die genannten Aminosilane mit beliebigen cyclischen Carbonaten und/oder Lactonen unter Ringöffnung umgesetzt.

Geeignete cyclische Carbonate sind insbesondere solche mit 3 oder 4 Kohlenstoffatomen im Ring, die gegebenenfalls auch substituiert sein können, wie z. B. 1,3-Dioxolan-2-on (Ethylencarbonat, EC), 4-Chlor-1,3-dioxolan-2-on, 4,5-Dichlor-1,3-dioxolan-2-on, 4-Methyl-1,3-dioxolan-2-on (Propylencarbonat, PC), 4-Ethyl-1,3-dioxolan-2-on, 4,5-Dimethyl-1,3-dioxolan-2-on, 4,4-Dimethyl-1,3-dioxolan-2-on, 4-Hydroxymethyl-1,3-dioxolan-2-on (Glycerincarbonat), 4-Phenoxymethyl-1,3-dioxolan-2-on, 1,3-Dioxan-2-on (Trimethylencarbonat), 5,5-Dimethyl-1,3-dioxan-2-on, 5-Methyl-5-propyl-1,3-dioxan-2-on, 5-Ethyl-5-(hydroxymethyl)-1,3-dioxan-2-on (TMP-Carbonat), 4-Isopropyl-5,5-dimethyl-1,3-dioxan-2-on (2,2,4-Trimethyl-pentan-1,3-diolcarbonat), 4-tert-Butyl-5-methyl-1,3-dioxan-2-on (2,4,4-Trimethyl-pentan-1,3-diolcarbonat), 2,4-Dioxaspiro[5.5]un-decan-3-on (Cyclohexan-1,1-dimethanolspirocarbonat) oder beliebige Gemische solcher cyclischen Carbonate. Bevorzugte cyclische Carbonate sind Ethylencarbonat und/oder Propylencarbonat.

Geeignete Lactone sind beispielsweise solche mit 3 bis 6 Kohlenstoffatomen im Ring, die gegebenenfalls auch substituiert sein können, wie z. B. β-Propiolacton, β-Butyrolacton, β-Butyrolacton, α-Methyl-γ-Butyrolacton, γ-Valerolacton, γ-Phenyl-γ-butyrolacton, α,α-Diphenyl-γ-butyrolacton, γ-Hexalacton (γ-Caprolacton), γ-Heptalacton, γ-Octalacton, γ-Nonalacton, γ-Decalacton, γ-Undecalacton, γ-Dodecalacton, γ-Methyl-γ-decanolacton, α-Acetyl-γ-butyrolacton, δ-Valerolacton, δ-Hexanolacton, δ-Octanolacton, δ-Nonanolacton, δ-Decalacton, δ-Undecalacton, δ-Tridecalacton, δ-Tetradecalacton, γ-Ethyl-γ-butyl-5-valerolacton, Octahydrocoumarin, ε-Capro-lacton, γ-Phenyl-ε-Caprolacton, ε-Decalacton oder beliebige Gemische solcher Lactone. Bevorzugte Lactone sind β-Propiolacton, γ-Butyrolacton, γ-Valerolacton, γ-Caprolacton und/oder ε-Caprolacton.

Die Herstellung der Ausgangsverbindungen A) durch Umsetzung der genannten Aminosilane mit den cyclischen Carbonaten oder Lactonen ist an sich bekannt und kann beispielsweise nach den in SU 295764, US 4 104 296, EP-B 0 833 830 oder WO 98/18844 beschriebenen Verfahren erfolgen. Im allgemeinen werden dabei die Reaktionspartner bei Temperaturen von 15 bis 100°C, vorzugsweise 20 bis 60°C in äquimolaren Mengen miteinander zur Reaktion gebracht. Es ist aber auch möglich, dass eine der Komponenten, beispielsweise das Aminosilan oder das cyclische Carbonat bzw. Lacton, in einer molar überschüssigen Menge eingesetzt wird, vorzugsweise jedoch in einem Überschuss von maximal 10 mol-%, besonders bevorzugt von maximal 5 mol-%. Die so erhältlichen hydroxyfunktionellen Ausgangsverbindungen A), die bei Einsatz von cyclischen Carbonaten Urethangruppen, bei Einsatz von Lactonen Amidgruppen enthalten, stellen in der Regel farblose niedrigviskose Flüssigkeiten dar.

Als Ausgangsverbindungen B) für das erfindungsgemäße Verfahren sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können. Geeignete Ausgangsdiisocyanate sind beispielsweise solche des Molekulargewichtsbereiches 140 bis 400 g/mol, wie z. B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan, 1,3- und 1,4-Bis(isocyanatomethyl)-cyclohexan, 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Als Ausgangskomponente B) bevorzugt sind die genannten Diisocyanate mit aliphatisch und/oder cycloaliphatisch gebundenen Isocyanatgruppen.

Besonders bevorzugte Ausgangskomponenten B) für das erfindungsgemäße Verfahren sind 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Zur Durchführung des erfindungsgemäßen Verfahrens werden die Silangruppen aufweisenden Hydroxyurethane und/oder Hydroxyamide A) mit den Diisocyanaten B) bei Temperaturen von 40 bis 200 °C, vorzugsweise 60 bis 180 °C, unter Einhaltung eines Äquivalent-Verhältnisses von Isocyanatgruppen zu gegenüber Isocyanaten reaktiven Gruppen von 4:1 bis 50:1, vorzugsweise von 5:1 bis 30:1, zu Allophanatpolyisocyanaten umgesetzt.

Im Sinne der vorliegenden Erfindung gelten dabei als "gegenüber Isocyanaten reaktive Gruppen" neben den Hydroxylgruppen der Komponente A) und den hieraus durch NCO/OH-Reaktion intermediär sich bildenden Urethangruppen im Falle der Verwendung von Hydroxyurethanen auch die hierin bereits enthaltenen Urethangruppen, da diese unter den Reaktionsbedingungen ebenfalls zu Allophanatgruppen weiterreagieren.

Das erfindungsgemäße Verfahren kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das erfindungsgemäße Verfahren sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren für das erfindungsgemäße Verfahren sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen beim erfindungsgemäßen Verfahren, falls überhaupt, in einer Menge von 0,001 bis 5 Gew.-%, vorzugsweise 0,005 bis 1 Gew.-%, bezogen auf das Gesamtgewicht der Reaktionspartner A) und B) zum Einsatz und können sowohl vor Reaktionsbeginn als auch zu jedem Zeitpunkt der Reaktion zugesetzt werden.

Das erfindungsgemäße Verfahren wird vorzugsweise lösemittelfrei durchgeführt. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und - butyletheracetat, N-Methylpyrrolidon und N-Methylcaprolactam, oder beliebige Gemische solcher Lösemittel.

In einer möglichen Ausführungsform wird beim erfindungsgemäßen Verfahren das Ausgangsdiisocyanat B) bzw. eine Mischung verschiedener Ausgangsdiisocyanate gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird die hydroxyfunktionelle Ausgangsverbindung A) in der oben angegebenen Menge zugegeben und die Reaktionstemperatur für die Urethanisierung gegebenenfalls durch eine geeignete Maßnahme (Heizen oder Kühlen) auf eine Temperatur von 30 bis 120°C, vorzugsweise von 50 bis 100°C eingestellt. Im Anschluß an die Urethanisierungsreaktion, d. h. wenn der einem vollständigen Umsatz von Isocyanat- und Hydroxylgruppen theoretisch entsprechende NCO-Gehalt erreicht ist, kann die Allophanatisierung beispielsweise ohne Zusatz eines Katalysators durch Erhitzen des Reaktionsgemisches auf eine Temperatur von 140 bis 200°C gestartet werden. Vorzugsweise kommen zur Beschleunigung der Allophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 80 bis 120°C, ausreichend sind.

In einer anderen möglichen Ausführungsform des erfindungsgemäßen Verfahrens wird der gegebenenfalls mitzuverwendenden Katalysator entweder der Silankomponente A) und/oder der Diisocyanatkomponente B) bereits vor Beginn der eigentlichen Umsetzung zugemischt. In diesem Fall reagieren die sich intermediär bildenden und bei Einsatz von Hydroxyurethanen A) in diesen bereits enthaltenen Urethangruppen spontan weiter zur gewünschten Allophanatstruktur. Bei dieser Art der einstufigen Reaktionsführung werden die gegebenenfalls den Katalysator enthaltenden Ausgangsdiisocyanate B) gegebenenfalls unter Inertgas, wie beispielsweise Stickstoff, und gegebenenfalls in Gegenwart eines geeigneten Lösungsmittels der genannten Art, in der Regel bei für die Allophanatisierung optimalen Temperaturen im Bereich von 60 bis 140°C, vorzugsweise 80 bis 120°C, vorgelegt und mit der gegebenenfalls den Katalysator enthaltenden Silankomponente A) zur Reaktion gebracht.

Es ist aber auch möglich, den Katalysator dem Reaktionsgemisch zu einem beliebigen Zeitpunkt während der Urethanisierungsreaktion zuzusetzen. Bei dieser Ausführungsform des erfindungsgemäßen Verfahrens wird für die vor der Katalysatorzugabe ablaufende reine Urethanisierungsreaktion in der Regel eine Temperatur im Bereich von 30 bis 120°C, vorzugsweise von 50 bis 100°C, eingestellt. Nach Zugabe eines geeigneten Katalysators wird die Allophanatisierungreaktion schließlich bei Temperaturen von 60 bis 140°C, vorzugsweise von 80 bis 120°C, durchgeführt.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, vorzugsweise wenn der Allophanatisierungsgrad (d. h. der aus dem NCO-Gehalt errechenbare prozentuale Anteil der zu Allophanatgruppen umgesetzten, aus den Hydroxylgruppen der Komponente A) sich intermediär bildenden sowie bei Einsatz von Hydroxyurethanen A) in diesen bereits enthaltenen Urethangruppen) des Reaktionsgemisches mindestens 80 %, besonders bevorzugt mindestens 90 % beträgt, ganz besonders bevorzugt nach vollständiger Allophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls bei der Herstellung der Ausgangsverbindungen A) im Überschuss eingesetzten cyclischen Carbonate oder Lactone, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls überschüssig eingesetzte cyclischen Carbonate oder Lactone und gegebenenfalls mitverwendete Lösungsmittel sowie bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Aufarbeitung erhält man als Produkte des erfindungsgemäßen Verfahrens klare, farbhelle Polyisocyanate, die in der Regel Farbzahlen von unter 200 APHA, vorzugsweise von unter 100 APHA, besonders bevorzugt von unter 80 APHA, eine mittlere NCO-Funktionalität von 2,0 bis 5,0, vorzugsweise 2,4 bis 4,8, besonders bevorzugt 3,0 bis 4,5, und einen NCO-Gehalt von 6,0 bis 20,5 Gew.-%, vorzugsweise 10,0 bis 18,0 Gew.-%, besonders bevorzugt 12,0 bis 17,0 Gew.-%, aufweisen. Bei Einsatz selektiver Allophanatisierungskatalysatoren sind sie praktisch frei von Nebenprodukten wie z. B. Isocyanuraten, d. h. dass in nahezu jedem Molekül neben Isocyanatfunktionen zusätzlich mindestens eine Silangruppe vorliegt.

Die erfindungsgemäßen Allophanatpolyisocyanate stellen wertvolle Ausgangsmaterialien zur Herstellung von Polyurethan-Kunststoffen nach dem Isocyanat-Polyadditionsverfahren dar.

Sie können aufgrund ihrer -bezogen auf Silan-modifizierte Polyisocyanate des Standes der Technik- vergleichsweise niedrigen Viskosität lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen. Die erfindungsgemäßen Silan-modifizierten Allophanatpolyisocyanate eignen sich in hervorragender Weise als Härter für Zweikomponenten-Polyurethanlacke, in denen als Polyhydroxylverbindungen die üblichen Polyetherpolyole, Polyesterpolyole, Polycarbonatpolyole und/oder Polyacrylatpolyole als Reaktionspartner für die Polyisocyanate vorliegen. Besonders bevorzugte Reaktionspartner für die erfindungsgemäßen Verfahrensprodukte sind Hydroxylgruppen aufweisende Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren.

Im allgemeinen besitzen die mit den erfindungsgemäßen Silan-modifizierten Allophanatpolyisocyanaten formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(II)-octoat oder Molybdänglykolat. Daneben können auch Katalysatoren mitverwendet werden, die die Hydrolyse und Kondensation von Alkoxysilangruppen oder deren Reaktion mit den Hydroxylgruppen der als Bindemittel eingesetzten Polyolkomponenten beschleunigen. Derartige Katalysatoren sind neben vorstehend genannten Isocyanatkatalysatoren beispielsweise auch Säuren, wie z. B. p-Toluolsulfonsäure, Trifluormethansulfonsäure, Essigsäure, Trifluoressigsäure und Dibutylphosphat, Basen, wie z. B. N-substituierte Amidine wie 1,5-Diazabicyclo[4.3.0]non-5-en (DBN) und 1,5-Diazabicyclo[5.4.0]undec-7-en (DBU), aber auch Metallsalze oder metallorganische Verbindungen, wie z. B. Tetraisopropyltitanat, Tetrabutyltitanat, Titan(IV)acetylacetonat, Aluminiumacetylacetonat, Aluminiumtriflat oder Zinntriflat.

Selbstverständlich können die erfindungsgemäßen Silan-modifizierten Allophanatpolyisocyanate auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Gegenstand der Erfindung ist daher auch die Verwendung der erfindungsgemäßen Allophanatgruppen enthaltenden Polyisocyanate zur Herstellung von mit aus der Polyurethanchemie bekannten Blockierungsmitteln blockierten Polyisocyanaten, sowie die daraus resultierenden blockierten Polyisocyanate selbst.

Die erfindungsgemäßen Verfahrensprodukte können auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluß freie Aminogruppen und im Falle der Oxazolane auch freie Hydroxylgruppen, die unter Vernetzung mit der Isocyanatgruppen der Silan-modifizierten Allophanatpolyisocyanate abreagieren.

Die erfindungsgemäßen Silan-modifizierten Allophanatpolyisocyanate eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Gegebenenfalls können den mit den erfindungsgemäßen Silan-modifizierten Allophanatpolyisocyanaten formulierten Beschichtungssystemen auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)methyldiethoxysilan, (3-Glycidyloxypropyl)-trimethoxysilan, Phenyltrimethoxysilan oder Phenyltriethoxysilan, oder Gemische solcher Silanverbindungen als Reaktionspartner zugesetzt werden.

In allen Lackkombinationen liegen die erfindungsgemäßen Verfahrensprodukte und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Gegebenenfalls können die erfindungsgemäßen Polyisocyanatgemische in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Silan-modifizierten Allophanatpolyisocyanate formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände dieser Erfindung sind somit Beschichtungsmittel enthaltend die erfindungsgemäßen Allophanatgruppen tragenden Polyisocyanate, sowie die mit diesen Beschichtungsmitteln beschichteten Substrate.

### Beispiele

Alle Prozentangaben beziehen sich, soweit nichts Anderslautendes vermerkt, auf das Gewicht.
Die Bestimmung der NCO-Gehalte erfolgte nach DIN EN ISO 11909.

Sämtliche Viskositätsmessungen erfolgten mit einem Physica MCR 51 Rheometer der Fa. Anton Paar Germany GmbH (Ostfildem) nach DIN EN ISO 3219.

Die Hazen-Farbzahlen wurden an einem LICO 400 Farbmessgerät der Fa. Hach Lange GmbH, Düsseldorf, ermittelt.

Die im Falle der Ausgangsverbindungen A) angegebenen OH-Zahlen wurden aus dem sich theoretisch ergebenden Molekulargewicht der Idealstruktur (1: 1-Addukt) berechnet.

### Herstellung der Ausgangsverbindungen A)

### Silangruppen aufweisendes Hydroxyurethan A1)

221 g (1,0 mol) 3-Aminopropyltriethoxysilan wurden bei Raumtemperatur unter trockenem Stickstoff vorgelegt. Hierzu gab man unter Rühren innerhalb von 15 min 88 g (1,0 mol) Ethylencarbonat, wobei sich die Mischung aufgrund der freiwerdenden Reaktionswärme anfänglich bis auf 34°C erwärmte, und rührte anschließend ohne weiteres Heizen 18 Stunden bei Raumtemperatur nach. Eine Amin-Titration mit 1N HCl zeigte einen Umsatz von 99,8 %.

Man erhielt 2-Hydroxyethyl[3-(triethoxysilyl)propyl]urethan als farblose Flüssigkeit.

| | |
|---|---|
| Viskosität (23 °C): | 69 mPas |
| OH-Zahl (ber.): | 181 mg KOH/g |
| Molekulargewicht (ber.): | 309 g/mol |

### Silangruppen aufweisendes Hydroxyurethan A2)

179 g (1,0 mol) 3-Aminopropyltrimethoxysilan und 88 g (1,0 mol) Ethylencarbonat wurden nach dem für Ausgangsverbindung A1) beschriebenen Verfahren miteinander zur Reaktion gebracht. Der Umsatz (Amin-Titration mit 1N HCl) nach 18 Stunden betrug 99,6 %.

Man erhielt 2-Hydroxyethyl[3-(trimethoxysilyl)propyl]urethan als farblose Flüssigkeit.

| | |
|---|---|
| Viskosität (23 °C): | 245 mPas |
| OH-Zahl (ber.): | 210 mg KOH/g |
| Molekulargewicht (ber.): | 267 g/mol |

### Silangruppen aufweisendes Hydroxyurethan A3)

221 g (1,0 mol) 3-Aminopropyltriethoxysilan und 102 g (1,0 mol) Propylencarbonat wurden nach dem für Ausgangsverbindung A1) beschriebenen Verfahren miteinander zur Reaktion gebracht. Der Umsatz (Amin-Titration mit 1N HCl) nach 18 Stunden betrug 99,9 %.

Man erhielt ein Gemisch von 2-Hydroxypropyl[3-(triethoxysilyl)propyl]urethan und 2-Hydroxy-1-methylethyl[3-(triethoxysilyl)propyl]urethan als farblose Flüssigkeit.

| | |
|---|---|
| Viskosität (23 °C): | 86 mPas |
| OH-Zahl (ber.): | 173 mg KOH/g |
| Molekulargewicht (ber.): | 323 g/mol |

### Silangruppen aufweisendes Hydroxyurethan A4)

179 g (1,0 mol) 3-Aminopropyltrimethoxysilan und 102 g (1,0 mol) Propylencarbonat wurden nach dem für Ausgangsverbindung A1) beschriebenen Verfahren miteinander zur Reaktion gebracht. Der Umsatz (Amin-Titration mit 1N HCl) nach 18 Stunden betrug 99,7 %.

Man erhielt ein Gemisch von 2-Hydroxypropyl[3-(trimethoxysilyl)propyl]urethan und 2-Hydroxy-1-methylethyl[3-(trimethoxysilyl)propyl]urethan als farblose Flüssigkeit.

| | |
|---|---|
| Viskosität (23 °C): | 326 mPas |
| OH-Zahl (ber.): | 199 mg KOH/g |
| Molekulargewicht (ber.): | 281 g/mol |

### Silangruppen aufweisendes Hydroxyamid A5)

221 g (1,0 mol) 3-Aminopropyltriethoxysilan und 86 g (1,0 mol) γ-Butyrolacton wurden nach dem für Ausgangsverbindung A1) beschriebenen Verfahren miteinander zur Reaktion gebracht. Der Umsatz (Amin-Titration mit 1N HCl) nach 18 Stunden betrug 99,4 %.

Man erhielt 4-Hydroxy-N-[3-(triethoxysilyl)propyl]butanamid als farblose Flüssigkeit

| | |
|---|---|
| Viskosität (23 °C): | 326 mPas |
| OH-Zahl (ber.): | 199 mg KOH/g |
| Molekulargewicht (ber.): | 281 g/mol |

### Beispiel 1 (erfindungsgemäß)

1680 g (10,0 mol) Hexamethylendiisocyanat (HDI) wurden bei einer Temperatur von 80°C unter trockenem Stickstoff mit 309 g (1,0 mol) des Silangruppen aufweisenden Hydroxyurethans A1) versetzt und 3 Stunden gerührt, bis ein NCO-Gehalt von 40,1 %, entsprechend einer vollständigen Urethanisierung, erreicht war. Anschließend wurde das Reaktionsgemisch auf 95°C aufgeheizt und 0,5 g Zink(II)-2-ethyl-1-hexanoat als Allophanatisierungskatalysator zugegeben. Aufgrund der exotherm einsetzenden Reaktion stieg die Temperatur der Mischung bis auf 110°C an. Nach ca. 30 min betrug der NCO-Gehalt des Reaktionsgemisches 35,9 %. Der Katalysator wurde durch Zugabe von 1 g Benzoylchlorid deaktiviert und das nicht umgesetzte monomere HDI bei einer Temperatur von 130°C und einem Druck von 0,1 mbar im Dünnschichtverdampfer abgetrennt. Man erhielt 789 g eines praktisch farblosen, klaren Allophanat-Polyisocyanates mit folgenden Kenndaten:

| | | |
|---|---|---|
| NCO-Gehalt: | 13,7 % | |
| monomeres HDI: | 0,03 % | |
| Viskosität (23°C): | 1270 mPas | |
| Farbzahl (APHA): | 21 Hazen | |
| NCO-Funktionalität: | > 3 | (berechnet) |
| Silangruppen-Gehalt: | 9,6 % | (berechnet als SiO₃; Mol.-Gewicht = 76 g/mol) |

### Beispiel 2 (erfindungsgemäß)

Nach dem in Beispiel 1 beschriebenen Verfahren wurden 1680 g (10,0 mol) HDI mit 267 g (1,0 mol) des Silangruppen aufweisenden Hydroxyurethans A2) umgesetzt. Die Allophanatisierungsreaktion wurde bei einem NCO-Gehalt von 41,0 % durch Zugabe von 0,5 g Zink(II)-2-ethyl-1-hexanoat gestartet. Nach Erreichen eines NCO-Gehaltes von 36,7 % wurde das Reaktionsgemisch mit 1 g Benzoylchlorid gestoppt und wie in Beispiel 1 beschrieben aufgearbeitet. Man erhielt 690 g eines praktisch farblosen, klaren Allophanat-Polyisocyanates mit folgenden Kenndaten:

| | | |
|---|---|---|
| NCO-Gehalt: | 14,2 % | |
| monomeres HDI: | 0,06 % | |
| Viskosität (23°C): | 3050 mPas | |
| Farbzahl (APHA): | 19 Hazen | |
| NCO-Funktionalität: | > 3 | (berechnet) |
| Silangruppen-Gehalt: | 11,0 % | (berechnet als SiO₃; Mol.-Gewicht = 76 g/mol) |

### Beispiel 3 (Vergleich, analog WO 03/054049)

660 g (3,61 val) eines Polyisocyanuratpolyisocyanates auf Basis von HDI mit einem NCO-Gehalt von 23,0 % bei einer NCO-Funktionalität von 3,2, einem Gehalt an monomerem HDI von 0,1 % und einer Viskosität bei 23°C von ca. 1200 mPas wurden unter trockenem Stickstoff bei einer Temperatur von 100 °C innerhalb von 30 min mit 340 g (1,45 mol) N-(n-Butyl)-3-aminopropyltrimethoxysilan versetzt und anschließend 2 Stunden gerührt, bis ein NCO-Gehalt von 9,1 %, entsprechend einer vollständigen Umsetzung, erreicht war. Man erhielt ein Silangruppen-haltiges Polyisocyanat als farbloses, hochviskoses Harz mit den folgenden Kenndaten:

| | | |
|---|---|---|
| NCO-Gehalt: | 9,1 % | |
| monomeres HDI: | 0,03 % | |
| Viskosität (23°C): | 183.000 mPas | |
| Farbzahl (APHA): | 37 Hazen | |
| NCO-Funktionalität: | 1,9 | (berechnet) |
| Silangruppen-Gehalt: | 11,0 % | (berechnet als SiO₃; Mol.-Gewicht = 76 g/mol) |

### Beispiel 4 (Vergleich, analog WO 02/058569)

500 g (2,58 val) eines Polyisocyanuratpolyisocyanates auf Basis von HDI mit einem NCO-Gehalt von 21,7 % bei einer NCO-Funktionalität von 3,5, einer Gehalt an monomerem HDI von 0,1 % und einer Viskosität bei 23°C von ca. 3000 mPas wurden unter trockenem Stickstoff bei einer Temperatur von 80 °C innerhalb von 30 min mit 500 g (1,42 mol) N-(3-Trimethoxysilylpropyl)asparaginsäurediethylester, hergestellt nach Beispiel 5 der EP 0 596 360, versetzt und anschließend 2 Stunden gerührt, bis ein NCO-Gehalt von 4,9 %, entsprechend einer vollständigen Umsetzung, erreicht war. Man erhielt ein Silangruppen-haltiges Polyisocyanat als farbloses, hochviskoses Harz mit den folgenden Kenndaten:

| | | |
|---|---|---|
| NCO-Gehalt: | 4,9 % | |
| monomeres HDI: | 0,03 % | |
| Viskosität (23°C): | 127.000 mPas | |
| Farbzahl (APHA): | 65 Hazen | |
| NCO-Funktional ität: | 1,6 | (berechnet) |
| Silangruppen-Gehalt: | ca. 10,8 % | (berechnet als SiO₃; Mol.-Gewicht = 76 g/mol) |

Der Vergleich zeigt, dass die erfindungsgemäßen Silangruppen enthaltenden Polyisocyanate aus Beispiel 1 und 2 bei ähnlichem Gehalt an Silangruppen einen höheren Isocyanatgehalt, eine deutlich höhere NCO-Funktionalität und insbesondere eine erheblich niedrigere Viskosität aufweisen als die Silangruppen-haltigen Polyisocyanate der Vergleichsbeispiele 3 und 4.

### Beispiel 5 (erfindungsgemäß)

Nach dem in Beispiel 1 beschriebenen Verfahren wurden 1680 g (10,0 mol) HDI mit 323 g (1,0 mol) des Silangruppen aufweisenden Hydroxyurethans A3) umgesetzt. Die Allophanatisierungsreaktion wurde bei einem NCO-Gehalt von 39,8 % durch Zugabe von 0,5 g Zink(II)-2-ethyl-1-hexanoat gestartet. Nach Erreichen eines NCO-Gehaltes von 35,6 % wurde das Reaktionsgemisch mit 1 g Benzoylchlorid gestoppt und wie in Beispiel 1 beschrieben aufgearbeitet. Man erhielt 740 g eines praktisch farblosen, klaren Allophanat-Polyisocyanates mit folgenden Kenndaten:

| | | |
|---|---|---|
| NCO-Gehalt: | 13,5 % | |
| monomeres HDI: | 0,28 % | |
| Viskosität (23°C): | 1680 mPas | |
| Farbzahl (APHA): | 22 Hazen | |
| NCO-Funktionalität: | > 3 | (berechnet) |
| Silangruppen-Gehalt: | 10,3 % | (berechnet als SiO₃; Mol.-Gewicht = 76 g/mol) |

### Beispiel 6 (erfindungsgemäß)

Nach dem in Beispiel 1 beschriebenen Verfahren wurden 3360 g (20,0 mol) HDI mit 281 g (1,0 mol) des Silangruppen aufweisenden Hydroxyurethans A4) umgesetzt. Die Allophanatisierungsreaktion wurde bei einem NCO-Gehalt von 45,0 % durch Zugabe von 0,5 g Zink(II)-2-ethyl-1-hexanoat gestartet. Nach Erreichen eines NCO-Gehaltes von 42,7 % wurde das Reaktionsgemisch mit 1 g Benzoylchlorid gestoppt und wie in Beispiel 1 beschrieben aufgearbeitet. Man erhielt ca. 705 g eines praktisch farblosen, klaren Allophanat-Polyisocyanates mit folgenden Kenndaten:

| | | |
|---|---|---|
| NCO-Gehalt: | 14,6% | |
| monomeres HDI: | 0,21 % | |
| Viskosität (23°C): | 2630 mPas | |
| Farbzahl (APHA): | 19 Hazen | |
| NCO-Funktionalität: | > 3 | (berechnet) |
| Silangruppen-Gehalt: | 10,8 % | (berechnet als SiO₃; Mol.-Gewicht = 76 g/mol) |

### Beispiel 7 (erfindungsgemäß)

Nach dem in Beispiel 1 beschriebenen Verfahren wurden 1680 g (10,0 mol) HDI mit 307 g (1,0 mol) des Silangruppen aufweisenden Hydroxyamids A5) umgesetzt. Die Allophanatisierungsreaktion wurde bei einem NCO-Gehalt von 39,8 % durch Zugabe von 0,5 g Zink(II)-2-ethyl-1-hexanoat gestartet. Nach Erreichen eines NCO-Gehaltes von 35,6 % wurde das Reaktionsgemisch mit 1 g Benzoylchlorid gestoppt und wie in Beispiel 1 beschrieben aufgearbeitet. Man erhielt 537 g eines praktisch farblosen, klaren Allophanat-Polyisocyanates mit folgenden Kenndaten:

| | | |
|---|---|---|
| NCO-Gehalt: | 12,1 % | |
| monomeres HDI: | 0,08 % | |
| Viskosität (23°C): | 5270 mPas | |
| Farbzahl (APHA): | 24 Hazen | |
| NCO-Funktionalität: | 2,0 | (berechnet) |
| Silangruppen-Gehalt: | 14,1 % | (berechnet als SiO₃; Mol.-Gewicht = 76 g/mol) |

### Beispiel 8 (erfindungsgemäß)

Nach dem in Beispiel 1 beschriebenen Verfahren wurden 2222 g (10,0 mol) 1-Isocyanato-3,3,5-trimethyl-5-isocyanatomethylcyclohexan (IPDI) mit 309 g (1,0 mol) des Silangruppen aufweisenden Hydroxyurethans A1) umgesetzt. Die Allophanatisierungsreaktion wurde bei einem NCO-Gehalt von 31,5 % durch Zugabe von 0,4 g Zinn(II)-2-ethyl-1-hexanoat gestartet. Nach Erreichen eines NCO-Gehaltes von 28,2 % wurde das Reaktionsgemisch mit 1 g Benzoylchlorid gestoppt und das nicht umgesetzte monomere IPDI bei einer Temperatur von 160°C und einem Druck von 0,1 mbar im Dünnschichtverdampfer abgetrennt. Man erhielt 939 g eines viskosen, schwach gelben Allophanat-Polyisocyanates, das nach Lösen in 1-Methoxypropyl-2-acetat als 70 prozentige Lösung folgende Kenndaten aufwies:

| | | |
|---|---|---|
| NCO-Gehalt: | 8,4 % | |
| monomeres IPDI: | 0,33 % | |
| Viskosität (23°C): | 940 mPas | (70 % in MPA) |
| Farbzahl (APHA): | 31 Hazen | |
| NCO-Funktionalität: | > 3 | (berechnet) |
| Silangruppen-Gehalt: | ca. 5,7 % | (berechnet als SiO₃; Mol.-Gewicht = 76 g/mol) |

### Beispiel 9 (Vergleich, analog EP-A 1273640)

500 g (1,39 val) eines Polyisocyanuratpolyisocyanates auf Basis von IPDI, 70 prozentig gelöst in 1-Methoxypropyl-2-acetat (MPA), mit einem NCO-Gehalt von 11,7 %, einer NCO-Funktionalität von 3,3, einem Gehalt an monomerem IPDI von 0,3 % und einer Viskosität bei 23°C von ca. 5010 mPas wurden mit weiteren 42,9 g MPA verdünnt und unter trockenem Stickstoff bei einer Temperatur von 50 °C innerhalb von einer Stunde mit 100,0 g (0,23 mol) Bis(3-triethoxysilylpropyl)amin versetzt. Anschließend wurde eine Stunde nachgerührt, bis ein NCO-Gehalt von 7,5 %, entsprechend einer vollständigen Umsetzung, erreicht war. Man erhielt ein farbhelles Silangruppen-haltiges Polyisocyanat in Form einer 70 prozentigen Lösung in 1-Methoxypropyl-2-acetat, die die folgenden Kenndaten aufwies:

| | | |
|---|---|---|
| NCO-Gehalt: | 7,5 % | |
| monomeres IPDI: | 0,22 % | |
| Viskosität (23°C): | 2170 mPas | (70 % in MPA) |
| Farbzahl (APHA): | 26 Hazen | |
| NCO-Funktionalität: | 2,7 | (berechnet) |
| Silangruppen-Gehalt: | ca. 5,6 % | (berechnet als SiO₃; Mol.-Gewicht = 76 g/mol) |

Der Vergleich zeigt, daß das erfindungsgemäße Silangruppen enthaltende IPDI- Polyisocyanat aus Beispiel 8 bei ähnlichem Gehalt an Silangruppen einen höheren Isocyanatgehalt, eine deutlich höhere NCO-Funktionalität und eine niedrigere Viskosität aufweist als das Silangruppen-haltige Polyisocyanat aus Vergleichsbeispiel 9.

### Beispiel 10 (erfindungsgemäß)

Nach dem in Beispiel 1 beschriebenen Verfahren wurden 2620 g (10,0 mol) 4,4'-Diisocyanatodicyclohexylmethan mit 309 g (1,0 mol) des Silangruppen aufweisenden Hydroxyurethans A1) umgesetzt. Die Allophanatisierungsreaktion wurde bei einem NCO-Gehalt von 37,2 % durch Zugabe von 0,4 g Zinn(II)-2-ethyl-1-hexanoat gestartet. Nach Erreichen eines NCO-Gehaltes von 24,4 % wurde das Reaktionsgemisch mit 1 g Benzoylchlorid gestoppt und das nicht umgesetzte monomere 4,4'-Diisocyanatodicyclohexylmethan bei einer Temperatur von 170°C und einem Druck von 0,1 mbar im Dünnschichtverdampfer abgetrennt. Man erhielt 1043 g eines viskosen, gelblichen Allophanat-Polyisocyanates, das nach Lösen in 1-Methoxypropyl-2-acetat als 70 prozentige Lösung folgende Kenndaten aufwies:

| | | |
|---|---|---|
| NCO-Gehalt: | 7,2% | |
| monomeres 4,4'-Diisocyanatodicyclohexylmethan: | 0,41 % | |
| Viskosität (23°C): | 1145 mPas | (70 % in MPA) |
| Farbzahl (APHA): | 37 Hazen | |
| NCO-Funktionalität: | >3 | (berechnet) |
| Silangruppen-Gehalt: | ca. 5,1 % | (berechnet als SiO₃; Mol.-Gewicht = 76 g/mol) |

## Patentansprüche

1. Verfahren zur Herstellung Allophanatgruppen enthaltender Polyisocyanate durch Umsetzung
A) mindestens eines -aus der Reaktion von Aminosilanen mit cyclischen Carbonaten bzw. Lactonen erhältlichen- Silangruppen aufweisenden Hydroxyurethans und/oder Hydroxyamids
mit einer bezogen auf die NCO-reaktiven Gruppen der Komponente A) molar überschüssigen Menge an
B) mindestens einem Diisocyanat mit aliphatisch, cycloaliphatisch, araliphatisch und/oder aromatisch gebundenen Isocyanatgruppen
und gegebenenfalls nachfolgender Entfernung des nicht umgesetzten Diisocyanatüberschusses.

2. Verfahren gemäß Anspruch 1, **dadurch gekennzeichnet, dass** als Komponente A)
Reaktionsprodukte von Aminosilanen der allgemeinen Formel (I) 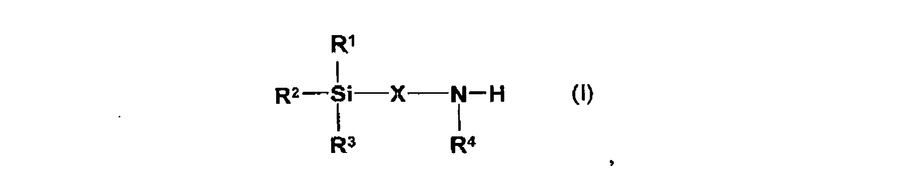 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht, der gegebenenfalls bis zu 2 Iminogruppen (-NH-) enthalten kann,
und
R¹ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 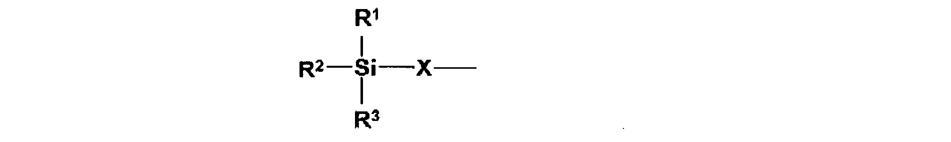 steht, in welchem R¹, R², R³ und X die vorstehend angegebene Bedeutung haben,
mit cyclischen Carbonaten und/oder Lactonen zum Einsatz kommen.

3. Verfahren gemäß Anspruch 1, **dadurch gekennzeichnet, dass** als Komponente A) Reaktionsprodukte von Aminosilanen der allgemeinen Formel (I) 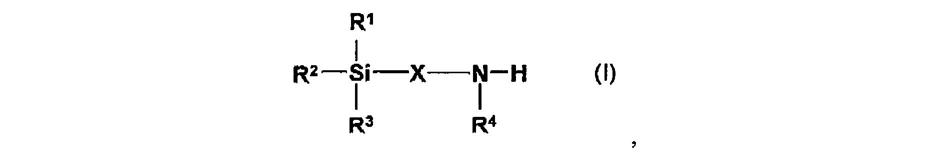 in welcher
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann,
X für einen linearen oder verzweigten Alkylenrest mit 2 bis 10 Kohlenstoffatomen steht, der gegebenenfalls bis zu 2 Iminogruppen (-NH-) enthalten kann,
und
R⁴ für Wasserstoff, einen gesättigten, linearen oder verzweigten, aliphatischen oder cycloaliphatischen Rest mit bis zu 6 Kohlenstoffatomen oder einen Rest der Formel 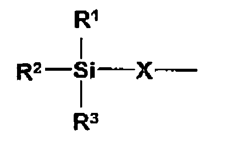 steht, in welchem R¹, R², R³ und X die vorstehend angegebene Bedeutung haben,
mit cyclischen Carbonaten und/oder Lactonen zum Einsatz kommen.

4. Verfahren gemäß Anspruch 1, **dadurch gekennzeichnet, dass** als Komponente A) Reaktionsprodukte von Aminosilanen der allgemeinen Formel (I) 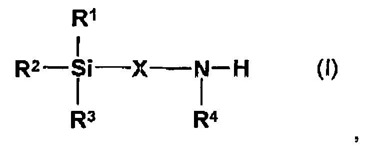 in welcher
R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht,
X für einen linearen oder verzweigten Alkylenrest mit 3 oder 4 Kohlenstoffatomen steht, und
R⁴ für Wasserstoff, einen Methylrest oder einen Rest der Formel 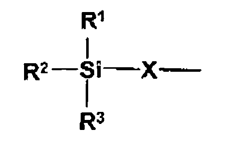 steht, in welchem R¹, R², R³ und X die vorstehend angegebene Bedeutung haben,
mit cyclischen Carbonaten und/oder Lactonen zum Einsatz kommen.

5. Verfahren gemäß Anspruch 1, **dadurch gekennzeichnet, dass** als Komponente A) Reaktionsprodukte von Aminosilanen der allgemeinen Formel (I) 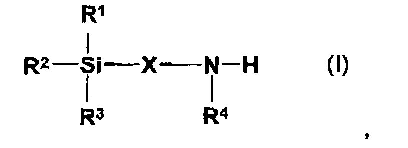 in welcher
R¹, R² und R³ für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht,
X für einen Propylenrest (-CH₂-CH₂-CH₂-) steht, und
R⁴ für Wasserstoff, einen Methylrest oder einen Rest der Formel 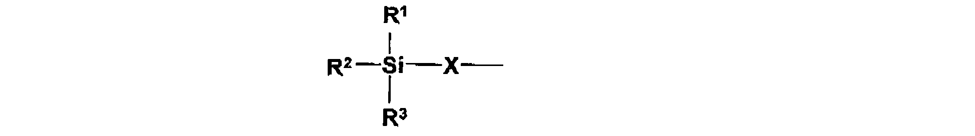 steht, in welchem R¹, R², R³ und X die vorstehend angegebene Bedeutung haben,
mit cyclischen Carbonaten und/oder Lactonen zum Einsatz kommen.

6. Verfahren gemäß Anspruch 1, **dadurch gekennzeichnet, dass** als Komponente A) Reaktionsprodukte von Aminopropyltrimethoxysilan, 3-Aminopropyltriethoxysilan, 3-Aminopropyl-methyldimethoxysilan und/oder 3-Aminopropylmethyldiethoxysilan mit cyclischen Carbonaten und/oder Lactonen zum Einsatz kommen.

7. Verfahren gemäß einem der Ansprüche 1 bis 6, **dadurch gekennzeichnet, dass** als Komponente A) Reaktionsprodukte von Aminosilanen mit Ethylencarbonat und/oder Propylencarbonat zum Einsatz kommen.

8. Verfahren gemäß einem der Ansprüche 1 bis 6, **dadurch gekennzeichnet, dass** als Komponente A) Reaktionsprodukte von Aminosilanen mit β-Propiolacton, γ-Butyrolacton, γ-Valerolacton, γ-Caprolacton und/oder ε-Caprolacton zum Einsatz kommen.

9. Verfahren gemäß einem der Ansprüche 1 bis 8, **dadurch gekennzeichnet, dass** als Komponente B) Diisocyanate mit aliphatisch und/oder cycloaliphatisch gebundenen Isocyanatgruppen zum Einsatz kommen.

10. Verfahren gemäß einem der Ansprüche 1 bis 8, **dadurch gekennzeichnet, dass** als Komponente B) 1,6-Diisocyanatohexan, 1-Isocyanato-3,3,5-trimethyl-5-isocyanatomethylcyclohexan, 2,4'-und/oder 4,4'-Diisocyanatodicyclohexylmethan oder beliebige Gemische dieser Diisocyanate zum Einsatz kommen.

11. Verfahren gemäß einem der Ansprüche 1 bis 10, **dadurch gekennzeichnet, dass** man die Umsetzung in Gegenwart eines die Bildung von Allophanatgruppen beschleunigenden Katalysators durchführt.

12. Verfahren gemäß Anspruch 11, **dadurch gekennzeichnet, dass** man als Allophanatisierungskatalysator Zink- und/oder Zirconiumcarboxylate einsetzt.

13. Verfahren gemäß Anspruch 11, **dadurch gekennzeichnet, dass** man als Allophanatisierungskatalysator Zink-(II)-n-octanoat, Zink-(II)-2-ethyl-1-hexanoat, Zink-(II)-stearat, Zirconium-(IV)-n-octanoat, Zirconium-(IV)-2-ethyl-1-hexanoat und/oder Zirconium-(IV)-neodecanoat einsetzt.

14. Allophanatgruppen enthaltende Polyisocyanate erhältlich nach einem Verfahren gemäß einem der Ansprüche 1 bis 13.

15. Verwendung der Allophanatgruppen enthaltenden Polyisocyanate gemäß Anspruch 14, zur Herstellung von mit Malonsäurediethylester, Acetessigester, aktivierten cyclischen Ketonen, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebigen Gemischen dieser Blockierungsmittel blockierten Polyisocyanaten.

16. Allophanatgruppen enthaltenden Polyisocyanate gemäß Anspruch 14, **dadurch gekennzeichnet, dass** sie mit Malensanrediathylester, Autersigestes, aktionerten cyclischen ketonen, Acetonoxim, Butanonoxim, ε-Caprolactam, 3,5-Dimethylpyrrol, 1,2,4-Tricorol, Dimethyl-1,2,4-tricorol, Dimdivise, Benzyl-tert-butylamino oder behibigen dieses Beschichtungsmittel blockiert sind.

17. Verwendung der Allophanatgruppen enthaltenden Polyisocyanate gemäß Anspruch 14 als Ausgangskomponente bei der Herstellung von Polyurethankunststoffen.

18. Beschichtungsmittel enthaltend Allophanatgruppen tragende Polyisocyanate gemäß Anspruch 14.

19. Mit Beschichtungsmitteln gemäß Anspruch 18 beschichtete Substrate.

## Claims

1. Process for preparing polyisocyanates containing allophanate groups
by reacting
A) at least one hydroxyamide and/or hydroxyurethane containing silane groups - obtainable from the reaction of aminosilanes with cyclic carbonates and/or lactones -
with a molar excess amount, based on the NCO-reactive groups of component A), of
B) at least one diisocyanate having aliphatically, cycloaliphatically, araliphatically and/or aromatically attached isocyanate groups
and, if desired, subsequently removing the unreacted diisocyanate excess.

2. Process according to Claim 1, **characterized in that** component A) comprises reaction products of aminosilanes of the general formula (I) 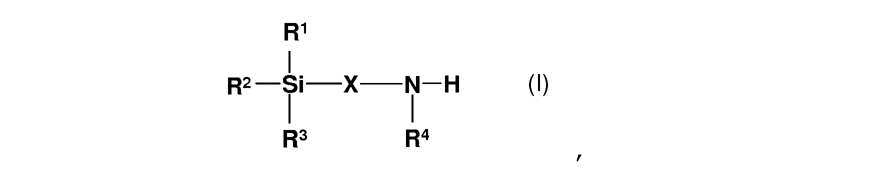 in which
R¹, R² and R³ are identical or different radicals and are each a saturated or unsaturated, linear or branched, aliphatic or cycloaliphatic, or an optionally substituted aromatic or araliphatic radical having up to 18 carbon atoms and being able to contain, if desired, up to 3 heteroatoms from the series oxygen, sulphur, nitrogen,
X is a linear or branched organic radical having at least 2 carbon atoms and able to contain, if desired, up to 2 imino groups (-NH-),
and
R⁴ is hydrogen, a saturated or unsaturated, linear or branched, aliphatic or cycloaliphatic, or an optionally substituted aromatic or araliphatic, radical having up to 18 carbon atoms, or a radical of the formula 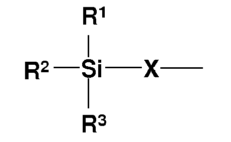 in which R¹, R², R³ and X have the definition stated above,
with cyclic carbonates and/or lactones.

3. Process according to Claim 1, **characterized in that** component A) comprises reaction products of aminosilanes of the general formula (I) 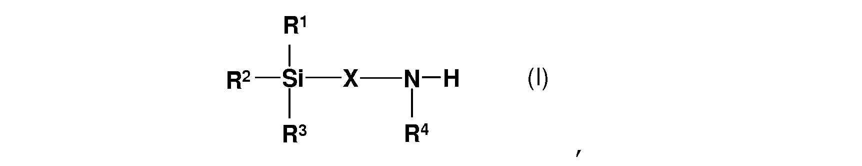 in which
R¹, R² and R³ are identical or different radicals and are each a saturated, linear or branched, aliphatic or cycloaliphatic radical having up to 6 carbon atoms and able to contain, if desired, up to 3 oxygen atoms,
X is a linear or branched alkylene radical having 2 to 10 carbon atoms and able to contain, if desired, up to 2 imino groups (-NH-),
and
R⁴ is hydrogen, a saturated, linear or branched, aliphatic or cycloaliphatic radical having up to 6 carbon atoms, or a radical of the formula 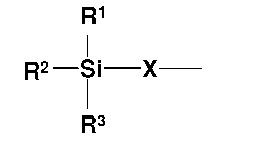 in which R¹, R², R³ and X have the definition stated above,
with cyclic carbonates and/or lactones.

4. Process according to Claim 1, **characterized in that** component A) comprises reaction products of aminosilanes of the general formula (I) 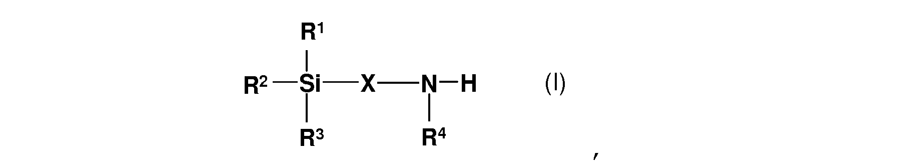 in which
R¹, R² and R³ are each alkyl radicals having up to 6 carbon atoms and/or alkoxy radicals which contain up to 3 oxygen atoms, with the proviso that at least one of the radicals R¹, R² and R³ is such an alkoxy radical,
X is a linear or branched alkylene radical having 3 or 4 carbon atoms, and
R⁴ is hydrogen, a methyl radical or a radical of the formula 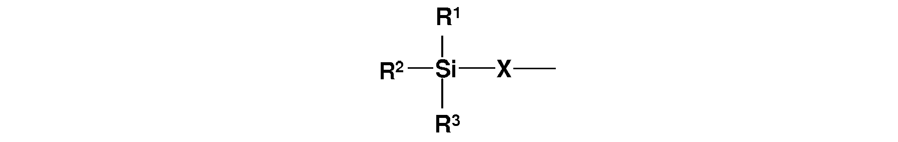 in which R¹, R², R³ and X have the definition stated above,
with cyclic carbonates and/or lactones.

5. Process according to Claim 1, **characterized in that** component A) comprises reaction products of aminosilanes of the general formula (I) 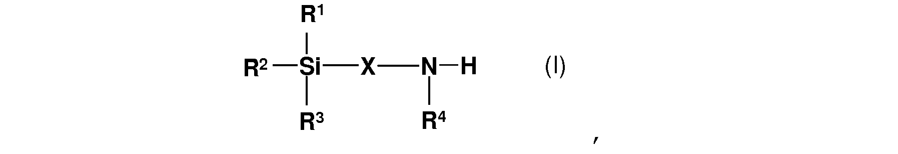 in which
R¹, R² and R³ are identical or different radicals and are each methyl, methoxy or ethoxy, with the proviso that at least one of the radicals R¹, R² and R³ is a methoxy or ethoxy radical,
X is a propylene radical (-CH₂-CH₂-CH₂-), and
R⁴ is hydrogen, a methyl radical or a radical of the formula 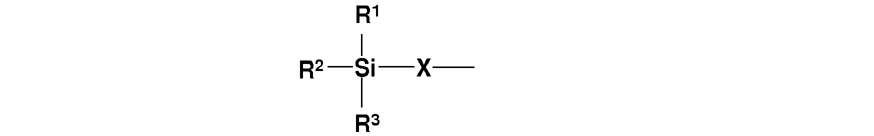 in which R¹, R², R³ and X have the definition stated above,
with cyclic carbonates and/or lactones.

6. Process according to Claim 1, **characterized in that** component A) comprises reaction products of aminopropyltrimethoxysilane, 3-aminopropyltriethoxysilane, 3-aminopropylmethyldimethoxysilane and/or 3-aminopropylmethyldiethoxysilane with cyclic carbonates and/or lactones.

7. Process according to any one of Claims 1 to 6, **characterized in that** component A) comprises reaction products of aminosilanes with ethylene carbonate and/or propylene carbonate.

8. Process according to any one of Claims 1 to 6, **characterized in that** component A) comprises reaction products of aminosilanes with β-propiolactone, γ-butyrolactone, γ-valerolactone, γ-caprolactone and/or ε-caprolactone.

9. Process according to any one of Claims 1 to 8, **characterized in that** component B) comprises diisocyanates having aliphatically and/or cycloaliphatically attached isocyanate groups.

10. Process according to any one of Claims 1 to 8, **characterized in that** component B) comprises 1,6-diisocyanatohexane, 1-isocyanato-3,3,5-trimethyl-5-isocyanatomethylcyclohexane, 2,4'- and/or 4,4'-diisocyanatodicyclohexylmethane or any desired mixtures of these diisocyanates.

11. Process according to any one of Claims 1 to 10, **characterized in that** the reaction is carried out in the presence of a catalyst which accelerates the formation of allophanate groups.

12. Process according to Claim 11, **characterized in that** zinc carboxylates and/or zirconium carboxylates are used as allophanatization catalyst.

13. Process according to Claim 11, **characterized in that** zinc(II) n-octanoate, zinc(II) 2-ethyl-1-hexanoate, zinc(II) stearate, zirconium(IV) n-octanoate, zirconium(IV) 2-ethyl-1-hexanoate and/or zirconium(IV) neodecanoate are used as allophanatization catalyst.

14. Polyisocyanates containing allophanate groups and obtainable by a process according to any one of Claims 1 to 13.

15. Use of the polyisocyanates containing allophanate groups according to Claim 14 for preparing polyisocyanates blocked with diethyl malonate, acetoacetic esters, activated cyclic ketones, acetone oxime, butanone oxime, ε-caprolactam, 3,5-dimethylpyrazole, 1,2,4-triazole, dimethyl-1,2,4-triazole, imidazole, benzyl-tert-butylamine or any desired mixtures of these blocking agents.

16. Polyisocyanates containing allophanate groups, according to Claim 14, **characterized in that** they are blocked with diethyl malonate, acetoacetic esters, activated cyclic ketones, acetone oxime, butanone oxime, ε-caprolactam, 3,5-dimethylpyrazole, 1,2,4-triazole, dimethyl-1,2,4-triazole, imidazole, benzyl-tert-butylamine or any desired mixtures of these blocking agents.

17. Use of the polyisocyanates containing allophanate groups, according to Claim 14, as a starting component in the production of polyurethane polymers.

18. Coating compositions comprising polyisocyanates carrying allophanate groups according to Claim 14.

19. Substrates coated with coating compositions according to Claim 18.

## Revendications

1. Procédé de fabrication de polyisocyanates contenant des groupes allophanate par mise en réaction de
A) au moins un hydroxyuréthane et/ou hydroxyamide comprenant des groupes silane, pouvant être obtenu par la réaction d'aminosilanes avec des carbonates ou des lactones cycliques
avec une quantité molaire en excès par rapport aux groupes réactifs avec NCO du composant A) de
B) au moins un diisocyanate contenant des groupes isocyanate reliés de manière aliphatique, cycloaliphatique, araliphatique et/ou aromatique
et éventuellement élimination ultérieure de l'excès de diisocyanate non réagi.

2. Procédé selon la revendication 1, **caractérisé en ce que** des produits de réaction d'aminosilanes de formule générale (I) 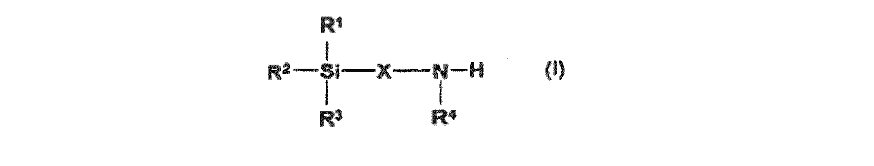 dans laquelle
R¹, R² et R³ représentent des radicaux identiques ou différents et signifient chacun un radical saturé ou insaturé, linéaire ou ramifié, aliphatique ou cycloaliphatique ou un radical aromatique ou araliphatique éventuellement substitué, contenant jusqu'à 18 atomes de carbone, qui peut éventuellement contenir jusqu'à 3 hétéroatomes de la série oxygène, soufre, azote,
X représente un radical organique linéaire ou ramifié contenant au moins 2 atomes de carbone, qui peut éventuellement contenir jusqu'à 2 groupes imino (-NH-),
et
R⁴ représente l'hydrogène, un radical saturé ou insaturé, linéaire ou ramifié, aliphatique ou cycloaliphatique ou un radical aromatique ou araliphatique éventuellement substitué, contenant jusqu'à 18 atomes de carbone, ou un radical de formule 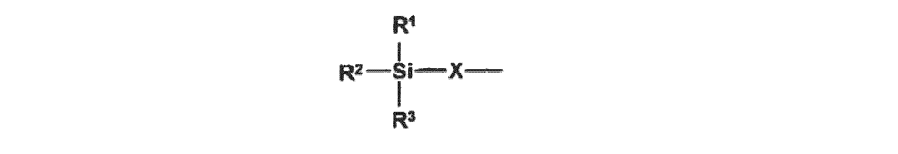 dans laquelle R¹, R², R³ et X ont la signification indiquée précédemment,
avec des carbonates et/ou des lactones cycliques sont utilisés en tant que composant A).

3. Procédé selon la revendication 1, **caractérisé en ce que** des produits de réaction d'aminosilanes de formule générale (I) 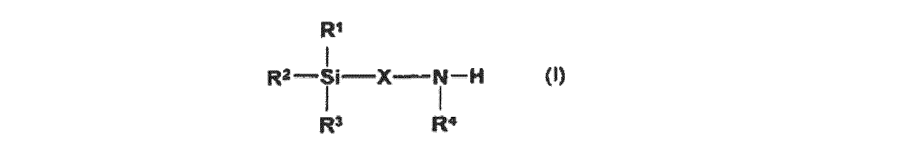 dans laquelle
R¹, R² et R³ représentent des radicaux identiques ou différents et signifient chacun un radical saturé, linéaire ou ramifié, aliphatique ou cycloaliphatique, contenant jusqu'à 6 atomes de carbone, qui peut éventuellement contenir jusqu'à 3 atomes d'oxygène,
X représente un radical alkylène linéaire ou ramifié contenant 2 à 10 atomes de carbone, qui peut éventuellement contenir jusqu'à 2 groupes imino (-NH-), et
R⁴ représente l'hydrogène, un radical saturé, linéaire ou ramifié, aliphatique ou cycloaliphatique, contenant jusqu'à 6 atomes de carbone, ou un radical de formule 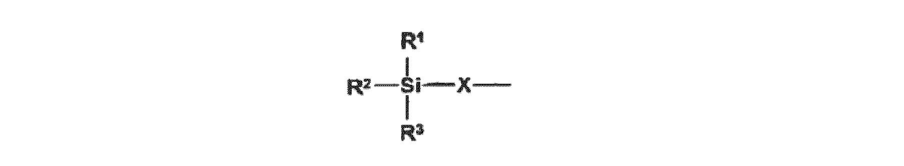 dans laquelle R¹, R², R³ et X ont la signification indiquée précédemment,
avec des carbonates et/ou des lactones cycliques sont utilisés en tant que composant A).

4. Procédé selon la revendication 1, **caractérisé en ce que** des produits de réaction d'aminosilanes de formule générale (I) 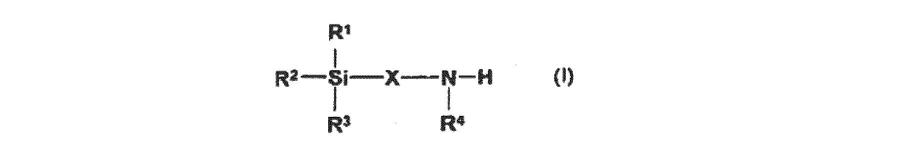 dans laquelle
R¹, R² et R³ signifient chacun des radicaux alkyle contenant jusqu'à 6 atomes de carbone et/ou des radicaux alcoxy contenant jusqu'à 3 atomes d'oxygène, à condition qu'au moins un des radicaux R¹, R² et R³ représente un tel radical alcoxy,
X représente un radical alkylène linéaire ou ramifié contenant 3 ou 4 atomes de carbone, et
R⁴ représente l'hydrogène, un radical méthyle ou un radical de formule 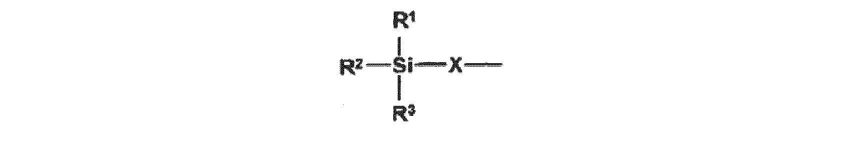 dans laquelle R¹, R², R³ et X ont la signification donnée précédemment,
avec des carbonates et/ou des lactones cycliques sont utilisés en tant que composant A).

5. Procédé selon la revendication 1, **caractérisé en ce que** des produits de réaction d'aminosilanes de formule générale (I) 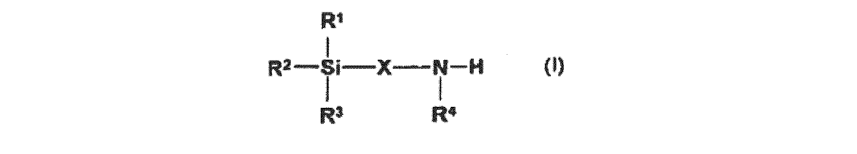 dans laquelle
R¹, R² et R³ représentent des radicaux identiques ou différents et signifient chacun méthyle, méthoxy ou éthoxy, à condition qu'au moins un des radicaux R¹, R² et R³ représente un radical méthoxy ou éthoxy,
X représente un radical propylène (-CH₂-CH₂-CH₂-), et
R⁴ représente l'hydrogène, un radical méthyle ou un radical de formule 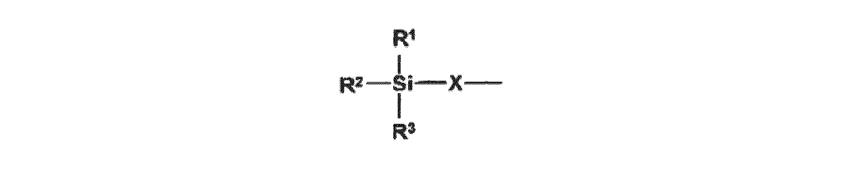 dans laquelle R¹, R², R³ et X ont la signification donnée précédemment,
avec des carbonates et/ou des lactones cycliques sont utilisés en tant que composant A).

6. Procédé selon la revendication 1, **caractérisé en ce que** des produits de réaction d'aminopropyltriméthoxysilane, de 3-aminopropyltriéthoxysilane, de 3-aminopropylméthyldiméthoxysilane et/ou de 3-aminopropylméthyldiéthoxysilane avec des carbonates et/ou des lactones cycliques sont utilisés en tant que composant A).

7. Procédé selon l'une quelconque des revendications 1 à 6, **caractérisé en ce que** des produits de réaction d'aminosilanes avec du carbonate d'éthylène et/ou du carbonate de propylène sont utilisés en tant que composant A).

8. Procédé selon l'une quelconque des revendications 1 à 6, **caractérisé en ce que** des produits de réaction d'aminosilanes avec la β-propiolactone, la γ-butyrolactone, la γ-valérolactone, la γ-caprolactone et/ou l'ε-caprolactone sont utilisés en tant que composant A).

9. Procédé selon l'une quelconque des revendications 1 à 8, **caractérisé en ce que** des diisocyanates contenant des groupes isocyanate reliés de manière aliphatique et/ou cycloaliphatique sont utilisés en tant que composant B).

10. Procédé selon l'une quelconque des revendications 1 à 8, **caractérisé en ce que** le 1,6-diisocyanatohexane, le 1-isocyanato-3,3,5-triméthyl-5-isocyanatométhylcyclohexane, le 2,4'- et/ou 4,4'-diisocyanatodicyclohexylméthane ou des mélanges quelconques de ces diisocyanates sont utilisés en tant que composant B).

11. Procédé selon l'une quelconque des revendications 1 à 10, **caractérisé en ce que** la réaction est réalisée en présence d'un catalyseur accélérant la formation de groupes allophanate.

12. Procédé selon la revendication 11, **caractérisé en ce que** des carboxylates de zinc et/ou de zirconium sont utilisés en tant que catalyseur d'allophanatisation.

13. Procédé selon la revendication 11, **caractérisé en ce que** du n-octanoate de zinc (II), du 2-éthyl-1-hexanoate de zinc (II), du stéarate de zinc (II), du n-octanoate de zirconium (IV), du 2-éthyl-1-hexanoate de zirconium (IV) et/ou du néodécanoate de zirconium (IV) sont utilisés en tant que catalyseur d'allophanatisation.

14. Polyisocyanates contenant des groupes allophanate pouvant être obtenus par un procédé selon l'une quelconque des revendications 1 à 13.

15. Utilisation des polyisocyanates contenant des groupes allophanate selon la revendication 14, pour la fabrication de polyisocyanates bloqués avec de l'ester diéthylique de l'acide malonique, de l'ester acétoacétique, des cétones cycliques activées, de l'acétonoxime, de la butanonoxime, de l'ε-caprolactame, du 3,5-diméthylpyrazole, du 1,2,4-triazole, du diméthyl-1,2,4-triazole, de l'imidazole, de la benzyl-tert.-butylamine ou des mélanges quelconques de ces agents de blocage.

16. Polyisocyanates contenant des groupes allophanate selon la revendication 14, **caractérisés en ce qu'**ils sont bloqués avec de l'ester diéthylique de l'acide malonique, de l'ester acétoacétique, des cétones cycliques activées, de l'acétonoxime, de la butanonoxime, de l'ε-caprolactame, du 3,5-diméthylpyrazole, du 1,2,4-triazole, du diméthyl-1,2,4-triazole, de l'imidazole, de la benzyl-tert.-butylamine ou des mélanges quelconques de ces agents de blocage.

17. Utilisation des polyisocyanates contenant des groupes allophanate selon la revendication 14 en tant que composant de départ pour la fabrication de plastiques de polyuréthane.

18. Agents de revêtement contenant des polyisocyanates portant des groupes allophanate selon la revendication 14.

19. Substrats revêtus avec des agents de revêtement selon la revendication 18.
